# EUROPEAN PATENT SPECIFICATION

(11) **EP 4 469 334 B1**
(45) Date of publication and mention of the grant of the patent: **04.03.2026**
(21) Application number: 22703075.6
(22) Date of filing: 28.01.2022
(51) Int. Cl.: B62D 5/04

(54) **TECHNIQUES FOR ISOLATING ELECTRICAL CURRENT FROM A MOTOR IN AN ELECTRIC POWER STEERING SYSTEM**
VERFAHREN ZUR ISOLIERUNG VON ELEKTRISCHEM STROM AUS EINEM MOTOR IN EINEM ELEKTRISCHEN SERVOLENKSYSTEM
TECHNIQUES POUR ISOLER UN COURANT ÉLECTRIQUE D'UN MOTEUR DANS UN SYSTÈME DE DIRECTION ASSISTÉE ÉLECTRIQUE

(43) Date of publication of application: 04.12.2024
(73) Proprietor: BRP Megatech Industries Inc., Valcourt, QC J0E 2L0 (CA)
(72) Inventor: RACINE, Emmanuel, Québec G9T 4T4 (CA); VEILLETTE, Jean-Francois, Québec G0X 2L0 (CA)
(74) Representative: BCF Global
(86) International application number: PCT/IB2022/050778
(87) International publication number: WO 2023/144588

(56) References cited:
- DE-A1- 102018 114 977

## Description

### BACKGROUND

### 1. Field of the Invention

The subject invention relates to systems, methods, and apparatuses relating to electric power steering, and more specifically, systems, methods, and apparatuses for isolating electric current from an electric power steering motor.

### 2. Description of Related Art

Conventionally, electric power steering systems facilitate the steering of a motor vehicle by augmenting a driver's steering effort through the use of electrical power. These electric power steering systems typically involve a variety of sensors, a controller, and an electric motor. In a general configuration, the driver of the motor vehicle requests an amount of torque from the electric power steering system using a steering wheel or handlebar. The variety of sensors receive and relay the requested torque to the controller for further analysis. The controller then takes the requested torque value and uses it to determine the correct amount of electrical current to provide to the electric motor. In this way, the electric motor is able to properly facilitate the steering of the motor vehicle.

However, there remains a need in the art to instantly isolate electrical current from the motor when a fault is detected in the electric power steering system. As such, there are opportunities to address at least the aforementioned problem. In this context document DE 10 2018 114977 A1 discloses an electric power steering system comprising an electric motor comprising a phase winding, a battery configured to provide power, a motor drive circuit coupled to the battery and to the electric motor, the motor drive circuit being configured to provide power from the battery to the electric motor, the motor drive circuit comprising a branch including a transistor configured to operate in a conducting state and a non-conducting state, the branch being coupled to the phase winding of the electric motor, a phase isolation circuit comprising a phase isolation branch coupled to the branch of the motor drive circuit and to the phase winding, such that the branch is coupled to the phase winding of the electric motor via the phase isolation branch, wherein the phase isolation branch includes a transient voltage suppressor diode coupled to the phase winding of the electric motor and a phase isolation transistor configured to operate in a conducting state and a non-conducting state, the phase isolation transistor being coupled to the phase winding of the electric motor and a fault detector configured to detect a fault condition and switch the phase isolation transistor to the non-conducting state in response to detecting the fault condition. Document DE 10 2018 114977 A1 further discloses a method of isolating power from an electric motor of an electric power steering system, the electric power steering system including a battery, a phase isolation circuit including a phase isolation transistor and a transient voltage suppressor diode, a motor drive circuit coupled to the battery and coupled to the electric motor via the phase isolation circuit and including a transistor, the method comprising steps of controlling the transistor of the motor drive circuit to provide power from a battery to the electric motor via a phase isolation circuit, detecting a fault condition of the electric power steering system, controlling the phase isolation transistors of the phase isolation circuit to prevent the motor drive circuit from providing power to the electric motor and diverting a current induced by the electric motor, with the transient voltage suppressor diode, from the phase isolation transistor after controlling the transistor of the phase isolation circuit to prevent the motor drive circuit from providing power to the electric motor.

### SUMMARY

One implementation of an electric power steering system is provided. The electric power steering system comprises an electric motor comprising a phase winding; a battery configured to provide power; a motor drive circuit coupled to the battery and to the electric motor, the motor drive circuit being configured to provide power from the battery to the motor, the motor drive circuit comprising a branch including a transistor configured to operate in a conducting state and a non-conducting state, the branch being coupled to the phase winding of the electric motor; a phase isolation circuit comprising a phase isolation branch coupled to the branch of the motor drive circuit and to the phase winding, such that the branch is coupled to the phase winding of the electric motor via the phase isolation branch, wherein the phase isolation branch includes: a bidirectional transient voltage suppressor (TVS) diode coupled to the phase winding of the electric motor; and a phase isolation transistor configured to operate in a conducting state and a non-conducting state, the phase isolation transistor being coupled to the phase winding of the electric motor; and a fault detector configured to detect a fault condition and switch the phase isolation transistor to the non-conducting state in response to detecting the fault condition, wherein the bidirectional TVS diode is configured for allowing a current to flow bidirectionally therethrough when a voltage across the bidirectional TVS diode exceeds a blocking voltage of the bidirectional TVS diode.

One implementation of a method of isolating power from an electric motor of an electric power steering system is provided. The electric power steering system includes a battery, a phase isolation circuit including a phase isolation transistor and a bidirectional transient voltage suppressor (TVS) diode, a motor drive circuit coupled to the battery and coupled to the electric motor via the phase isolation circuit and including a transistor. The method comprises steps of: controlling the transistor of the motor drive circuit to provide power from a battery to the electric motor via a phase isolation circuit; detecting a fault condition of the electric power steering system; controlling the phase isolation transistor of the phase isolation circuit to prevent the motor drive circuit from providing power to the electric motor; and diverting current induced by the motor, with the TVS diode, from the phase isolation transistor after controlling the transistor of the phase isolation circuit to prevent the motor drive circuit from providing power to the electric motor, the bidirectional TVS diode allowing the current induced by the electric motor to flow bidirectionally therethrough, when a voltage across the bidirectional TVS diode exceeds a blocking voltage of the bidirectional TVS diode.

### BRIEF DESCRIPTION OF THE DRAWINGS

Advantages of the present invention will be readily appreciated as the same becomes better understood by reference to the following detailed description when considered in connection with the accompanying drawings wherein:
Figure 1 is a perspective view of an electric power steering system.
Figure 2 is a schematic view of a controller, a motor drive circuit, a phase isolation circuit, and a motor of the electric power steering system of Figure 1.
Figure 3 is a circuit diagram of the motor drive circuit, the phase isolation circuit, and the motor of Figure 2.
Figure 4 is a flowchart illustrating a configuration of a fault detector of the electric power steering system of Figure 1.
Figure 5 is a circuit diagram of the motor drive circuit, the phase isolation circuit, and the motor of Figure 2, wherein the motor induces a current.
Figure 6 is a circuit diagram of the motor drive circuit, the phase isolation circuit, and the motor of Figure 2, wherein a short circuit fault condition exists across a transistor of the motor drive circuit.
Figure 7 is a circuit diagram of the motor drive circuit, the phase isolation circuit, and the motor of Figure 2, wherein a short circuit fault condition exists across a TVS diode of the phase isolation circuit.

### DETAILED DESCRIPTION

Referring to the Figures, wherein like numerals indicate like or corresponding parts throughout the several views, an electric power steering unit for isolating electrical current from a motor is provided.

### I. Electric Power Steering System Overview

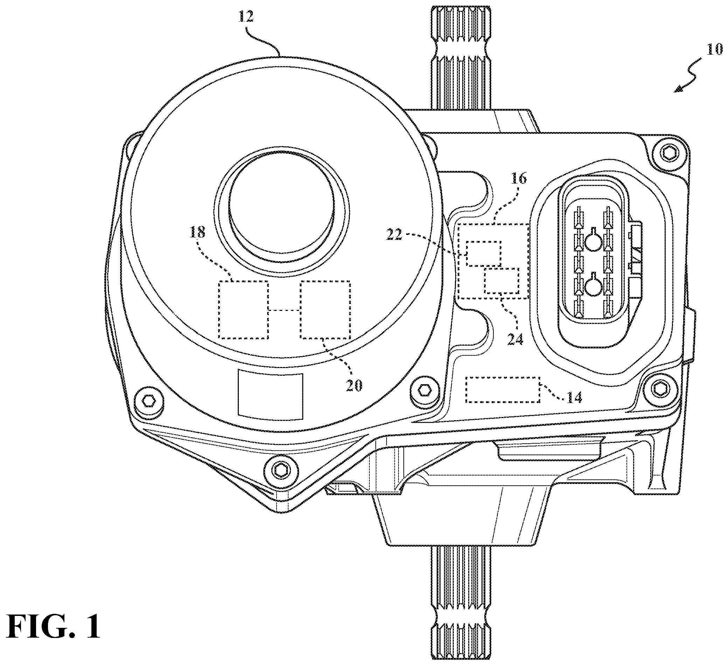

An instance of the electric power steering system 10 is shown in FIG. 1. The electric power steering system 10 shown in FIG. 1 includes an electric motor 12, a battery 14, a motor drive circuit 18, and a phase isolation circuit 20.

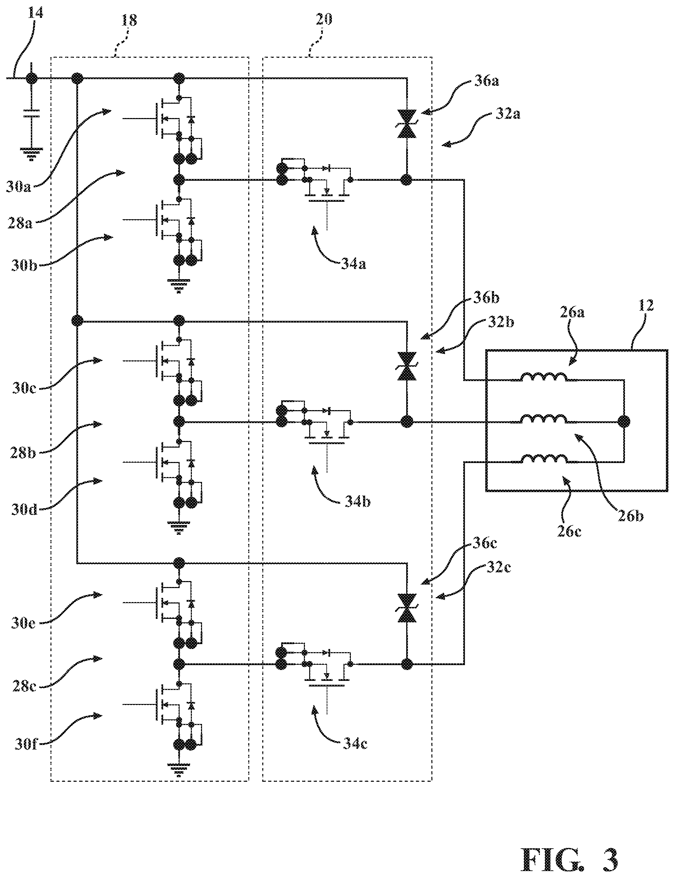

The motor 12 may be any motor suitable for an electric power steering system 10. In the instance of FIG. 3, the motor 12 is a three-phase induction motor with a first-, second-, and third-phase winding 26a, 26b, 26c. In other instances, the motor 12 may be a single-phase induction motor including a single-phase winding, or a dual-phase induction motor including two phase windings. Additionally, it is contemplated that the motor 12 may be a DC motor.

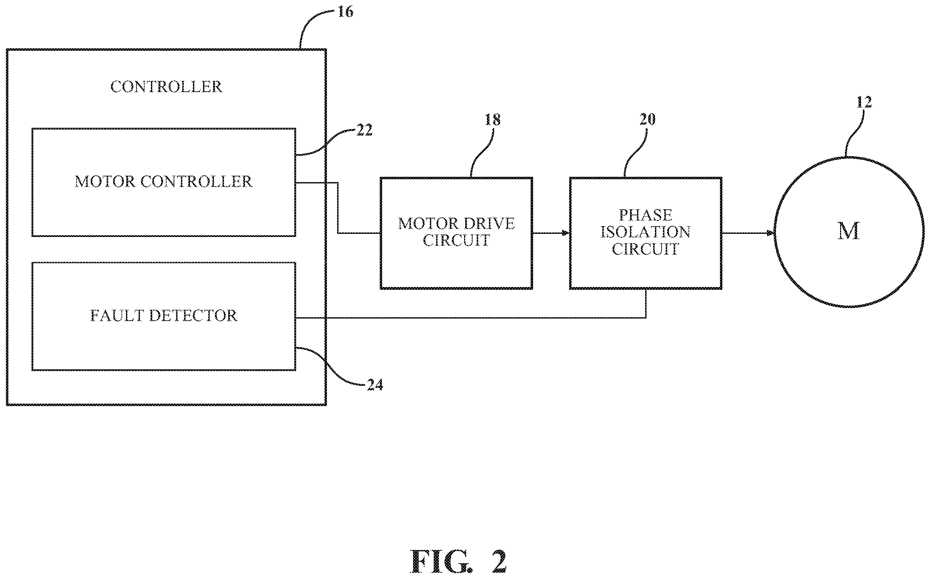

The battery is configured to provide power to the motor drive circuit 18 and the motor drive circuit 18 is configured to provide power from the battery 14 to the motor 12. The phase isolation circuit 20 is configured to isolate the motor drive circuit 18 from the motor 12 in response to detected faults of the motor drive circuit 18 and/or the phase isolation circuit 20. As shown in FIG. 2, the motor drive circuit 18 is coupled to the electric motor 12 via the phase isolation circuit 20. In this way, the phase isolation circuit 20 is configured to isolate the motor drive circuit 18 from the motor 12 by preventing the motor drive circuit 18 from providing power to the motor 12.

Also shown in FIG. 1, the electric power steering system 10 may include a controller 16. The controller 16 is configured to control components (to be described in greater detail herein) of the motor drive circuit 18 and the phase isolation circuit 20. Specifically, the motor drive circuit 18 includes a motor controller 22 configured to control components of the motor drive circuit 18 and a fault detector 24 configured to control components of the phase isolation circuit 20. FIG. 2 illustrates a relationship between the motor controller 22, the fault detector 24, the motor drive circuit 18, and the phase isolation circuit 20.

### II. Construction of the Motor Drive Circuit

The motor drive circuit 18 is further shown in FIG. 3. As shown, the motor drive circuit 18 includes a first, second, and third branch 28a, 28b, 28c, each branch being coupled to a phase winding 26a, 26b, 26c of the motor 12. In this way, the motor drive circuit 18 provides power to a phase winding 26a, 26b, 26c via a branch 28a, 28b, 28c.

Each branch 28a, 28b, 28c includes a first and second transistor 30a, 30b, 30c, 30d, 30e, 30f such that the motor drive circuit 18 includes a total of six transistors. Each of the transistors 30a, 30b, 30c, 30d, 30e, 30f may be configured to operate in a conducting state and a non-conducting state.

The transistors 30a, 30b, 30c, 30d, 30e, 30f may be any suitable power transistor. For example, the transistors 30a, 30b, 30c, 30d, 30e, 30f may be a bipolar junction transistor (BJT) or a field-effect transistor (FET). More specifically, the transistors 30a, 30b, 30c, 30d, 30e, 30f may be a PNP transistor, a NPN transistor, a junction-gate field-effect transistor (JFET), an n-type metal-oxide-semiconductor field-effect transistor (N-MOSFET), a p-type metal-oxide-semiconductor field-effect transistor (P-MOSFET), or any other suitable transistor. In the example configuration of FIG. 3, the transistors 30a, 30b, 30c, 30d, 30e, 30f are illustrated as N-MOSFETs.

It should be noted that the motor drive circuit 18 includes three branches 28a, 28b, 28c such that the motor drive circuit 18 may provide power from the battery 14 to each phase winding 26a, 26b, 26c of the motor. It is contemplated that, in instances where the motor 12 is a single-phase induction motor or a dual-phase induction motor, the motor drive circuit 18 may include a single branch or two branches, respectively. As follows, in instances where the motor 12 is a single-phase induction motor or a dual-phase induction motor, the motor drive circuit 18 may include a total of two transistors or four transistors, respectively.

It should also be noted that the motor drive circuit 18 may include any suitable number of transistors. It is contemplated that each branch 28a, 28b, 28c may have a different number of transistors. It is also contemplated that each phase isolation branch 32a, 32b, 32c may include less than two transistors. It is further contemplated that each phase isolation branch 32a, 32b, 32c may include more than two transistors.

### III. Configuration of the Motor Controller

The motor controller 22 is configured to switch the transistors 30a, 30b, 30c, 30d, 30e, 30f between a conducting state and a non-conducting state. In this way, the motor controller 22 is configured to control the motor drive circuit 18 to provide power from the battery 14 to the motor 12. For example, the motor controller 22 may control the first and second transistor 30a, 30b of the first branch 28a such that the motor controller 22 controls the motor drive circuit 18 to provide power via the first branch 28a. Specifically, the motor controller 22 may control the first and/or second transistor 30a, 30b to be in the conducting state such that the motor drive circuit 18 provides power via the first branch 28a. The motor controller 22 may control the first and second transistors 30a, 30b to be in the non-conducting state such that the motor drive circuit 18 does not power via the first branch 28a.

The motor controller 22 may control the motor drive circuit 18 based on a variety of inputs. For example, the motor controller 22 may control the motor drive circuit 18 based on the detection of a fault condition (to be described in greater detail below). As another example, the motor controller 22 may control the motor drive circuit 18 based on an input from a user of the electric power steering system 10 and/or systems coupled to the electric power steering system 10. For instance, the motor controller 22 may control the motor drive circuit 18 based on an input received by a steering wheel coupled to the electric power steering system 10.

### IV. Construction of the Phase Isolation Circuit

The phase isolation circuit 20 is further shown in FIG. 3. As shown, the phase isolation circuit 20 includes a first, second, and third phase isolation branch 32a, 32b, 32c coupled to a corresponding branch 28a, 28b, 28c of the motor drive circuit 18 and to a corresponding phase winding 26a, 26b, 26c of the motor 12. As previously stated, and as further shown in FIG. 3, the motor drive circuit 18 is coupled to the motor 12 via the phase isolation circuit 20. Specifically, each branch 28a, 28b, 28c of the motor drive circuit 18 is coupled to the motor 12 via the corresponding phase isolation branch 32a, 32b, 32c, the branches 28a, 28b, 28c being coupled to the phase isolation circuit 20 in parallel with one another.

Each phase isolation branch 32a, 32b, 32c includes a phase isolation transistor 34a, 34b, 34c such that the phase isolation circuit 20 includes a total of three transistors. Each of the phase isolation transistors 34a, 34b, 34c may be configured to operate in a conducting state and a non-conducting state.

The phase isolation transistor 34a, 34b, 34c may be any suitable transistor. For example, the phase isolation transistor 34a, 34b, 34c may be a bipolar junction transistor (BJT) or a field-effect transistor (FET). More specifically, the phase isolation transistor 34a, 34b, 34c may be a PNP transistor, a NPN transistor, a junction-gate field-effect transistor (JFET), a metal-oxide-semiconductor field-effect transistor (MOSFET), or any other suitable transistor. In the example configuration of FIG. 3, the phase isolation transistors 34a, 34b, 34c are shown as MOSFETs.

Each phase isolation branch 32a, 32b, 32c also includes a diode 36a, 36b, 36c such that the phase isolation circuit 20 includes a total of three diodes 36a, 36b, 36c. As shown in FIG. 3, the diodes 36a, 36b, 36c of phase isolation branch 32a, 32b, 32c and each corresponding phase isolation transistor 34a, 34b, 34c are coupled to a phase winding 26a, 26b, 26c of the motor 12.

In the example configuration shown in FIG. 3, the diodes 36a, 36b, 36c are illustrated as bidirectional TVS diodes. However, it is contemplated that the diodes 36a, 36b, 36c may be any set of suitable diodes performing a suppression function. For example, the diodes 36a, 36b, 36c may include one or more of a Schottky diode, a junction diode, a Zener diode, and a unidirectional TVS diode. Furthermore, the diodes 36a, 36b, 36c may be selected to ensure proper operation. For example, the diodes 36a, 36b, 36c may be selected based on a threshold voltage, a reverse working voltage, a maximum forward current, a junction operating temperature, and/or any other diode specification.

It should be noted that the phase isolation circuit 20 includes three phase isolation branches 32a, 32b, 32c such that the phase isolation circuit 20 may provide power from the motor drive circuit 18 to each phase winding 26a, 26b, 26c of the motor. It is contemplated that, in instances where the motor 12 is a single-phase induction motor or a dual-phase induction motor, the phase isolation circuit 20 may include a single phase isolation branch or two phase isolation branches, respectively. In instances where the motor 12 is a single-phase induction motor or a dual-phase induction motor, the phase isolation circuit 20 may include a single phase isolation transistor or two phase isolation transistors, respectively. Furthermore, in instances where the motor 12 is a single-phase induction motor or a dual-phase induction motor, the phase isolation circuit 20 may include a single diode or two diodes, respectively.

It should also be noted that the phase isolation circuit 20 may include any suitable number of phase isolation transistors and diodes. It is contemplated that each phase isolation branch 32a, 32b, 32c may have a different number of transistors and diodes. It is also contemplated that each phase isolation branch 32a, 32b, 32c may have more than one transistor and more than one diode.

### V. Configuration of the Fault Detector

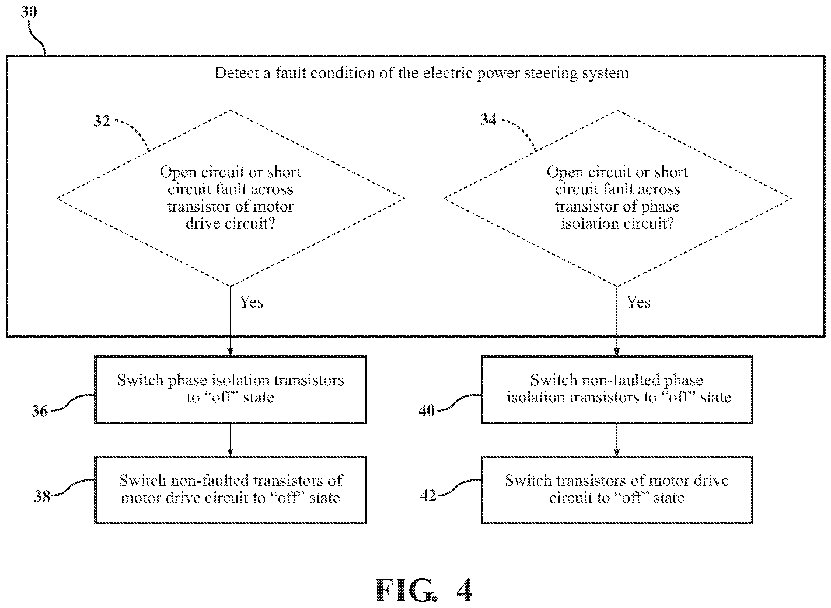

FIG. 4 illustrates an example configuration of the fault detector 24. As shown, the fault detector 24 may be configured to detect a fault condition of the electric power steering system 10 during step 30. Specifically, the fault detector 24 is configured to detect an open circuit fault and/or a short circuit fault across a transistor 30a, 30b, 30c, 30d, 30e, 30f of the motor drive circuit 18 during step 32 and to detect an open circuit fault and/or a short circuit fault across a transistor 34a, 34b, 34c of the phase isolation circuit 20 during step 34.

During an open circuit or short circuit fault, a transistor 30a, 30b, 30c, 30d, 30e, 30f, 34a, 34b or 34c has malfunctioned and operates in an unintended manner. For example, an open circuit fault across a transistor 30a, 30b, 30c, 30d, 30e, 30f, 34a, 34b or 34c causes the transistor to function as an open circuit when the transistor should operate in the conducting state. A short circuit fault across a transistor 30a, 30b, 30c, 30d, 30e, 30f, 34a, 34b or 34c causes the transistor to function as a short circuit when the transistor should function in the non-conducting state.

The fault detector 24 may be configured to detect a fault condition of the electric power steering system 10 using a variety of methods. In some instances, the fault detector 24 may compare an expected operation of the electric power steering system 10 with an actual operation of the electric power steering system 10 to determine whether a fault condition has occurred. Specifically, the fault detector 24 may determine and compare an amount of voltage and current provided to each winding 26a, 26b, 26c to an expected amount of voltage and current to be provided to each winding 26a, 26b, 26c.

Furthermore, it should be noted that the fault detector 24 may detect more than one fault condition. For example, the fault detector 24 may detect an open circuit fault and/or a short circuit fault across more than one transistor 30a, 30b, 30c, 30d, 30e, 30f of the motor drive circuit 18; the fault detector 24 may detect an open circuit fault and/or a short circuit fault across a transistor 30a, 30b, 30c, 30d, 30e or 30f of the motor drive circuit 18 and a phase isolation transistor 34a, 34b or 34c of the phase isolation circuit 20; and the fault detector 24 may detect an open circuit fault and/or a short circuit fault across more than one phase isolation transistor 34a, 34b, 34c of the phase isolation circuit 20.

Referring back to FIG. 4, if the fault detector 24 detects an open circuit fault and/or a short circuit fault across a transistor 30a, 30b, 30c, 30d, 30e or 30f of the motor drive circuit 18 during step 32, the fault detector 24 switches the phase isolation transistors 34a, 34b, 34c to the non-conducting state during step 36. For example, if the fault detector 24 detects an open circuit fault across the transistor 30a, the fault detector 24 switches the phase isolation transistors 34a, 34b, 34c to the non-conducting state. In this way, the fault detector 24 detects whether the motor drive circuit 18 is correctly providing power to the motor 12 by detecting the existence of a fault condition in the motor drive circuit 18. Accordingly, by switching the phase isolation transistors 34a, 34b, 34c to the non-conducting state, fault detector 24 prevents the motor drive circuit 18 from providing power to the motor 12, isolating the motor drive circuit 18 from the motor 12 and preventing self-induced current from circulating in the motor.

Additionally, if the fault detector 24 detects an open circuit fault and/or a short circuit fault across a transistor 30a, 30b, 30c, 30d, 30e or 30f of the motor drive circuit 18 during step 32, the fault detector 24 may switch the non-faulted transistors 30a, 30b, 30c, 30d, 30e, 30f to the non-conducting state during step 38. For example, in an instance where the fault detector 24 detects a short circuit fault across the transistor 30a, the fault detector 24 switches the non-faulted transistors 30b, 30c, 30d, 30e, 30f to the non-conducting state. As another example, in an instance where the fault detector 24 detects an open circuit fault across the transistors 30a, 30b, 30e, the fault detector 24 switches the non-faulted transistors 30c, 30d, 30f to the non-conducting state. In this way, the motor drive circuit 18 is further prevented from providing power to the motor 12 and is isolated from the motor 12. Self-induced currents in the motor are also prevented.

Also shown in FIG. 4, if the fault detector 24 detects an open circuit fault and/or a short circuit fault across a phase isolation transistor 34a, 34b or 34c of the phase isolation circuit 20 during step 34, the fault detector 24 switches the non-faulted phase isolation transistors 34a, 34b, 34c to the non-conducting state during step 40. For example, if the fault detector 24 detects an open circuit fault across the phase isolation transistor 34a, the fault detector 24 switches the phase isolation transistors 34b, 34c to the non-conducting state. As another example, if the fault detector 24 detects a short circuit fault across the phase isolation transistors 34a or 34b, the fault detector 24 switches the phase isolation transistor 34c to the non-conducting state.

Additionally, if the fault detector 24 detects an open circuit fault and/or a short circuit fault across a phase isolation transistor 34a, 34b or 34c of the phase isolation circuit 20 during step 42, the fault detector 24 may switch the transistors 30a, 30b, 30c, 30d, 30e, 30f to the non-conducting state. For example, in an instance where the fault detector 24 detects a short circuit fault across the phase isolation transistor 34a, the fault detector 24 switches the transistors 30a, 30b, 30c, 30d, 30e, 30f to the non-conducting state.

### VI. Configuration of the Diodes

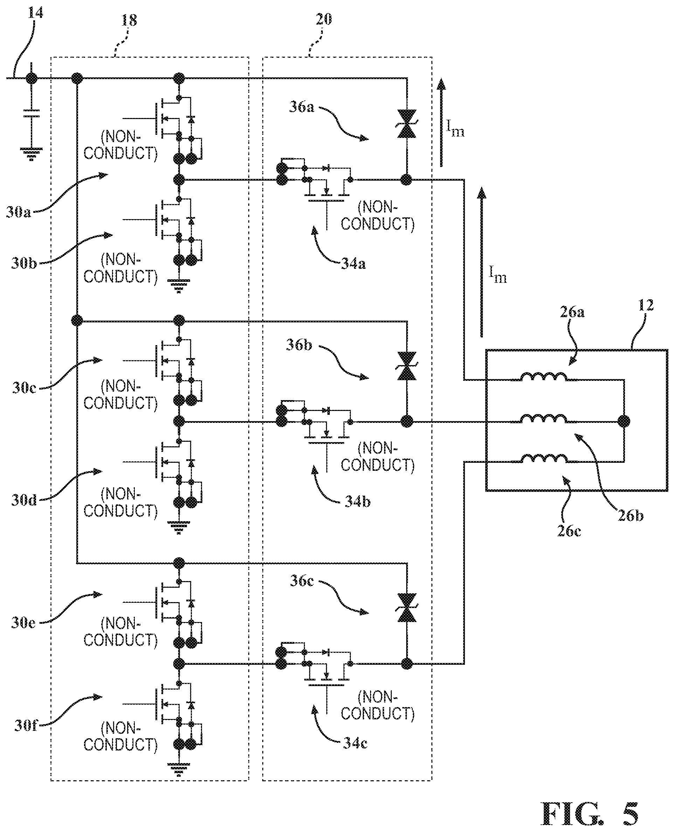

In some instances, the motor 12 may induce an electrical current after the fault detector 24 controls the phase isolation circuit 20 to isolate the motor drive circuit 18 from the motor 12. Such current arises because, after the phase isolation circuit 20 isolates the motor drive circuit 18 from the motor 12, the motor drive circuit 18 is no longer providing power to the motor 12. However, immediately after the phase isolation circuit 20 isolates the motor drive circuit 18 from the motor 12, the motor 12 is still rotating and/or its windings energized, inducing a current. The induced current Iₘ is shown in FIG. 5 in branch 28a but could also be in branch 28b or 28c.

Also shown in FIG. 5, the induced current Iₘ flows through the diode 36a after the fault detector 24 switches the phase isolation transistors 34a, 34b, 34c to the non-conducting state. In this way, the induced current Iₘ flows through the diode 36a, diverting the induced current Iₘ from the phase isolation transistors 34a, 34b, 34c. In this way, the induced current Iₘ is dissipated through the diode 36a and does not flow through the phase isolation transistors 34a, 34b, 34c.

Diverting the induced current Iₘ from the phase isolation transistors 34a, 34b, 34c offers several advantages.

Firstly, the diodes 36a, 36b, 36c allow the motor drive circuit 18 to be isolated from the motor 12, despite the presence of the induced current Iₘ. Should the diodes 36a, 36b, 36c be removed from the phase isolation circuit 20, the induced current Iₘ would flow through the phase isolation transistors 34a, 34b, 34c. In some instances, the induced current Iₘ may switch the phase isolation transistors 34a, 34b, 34c and, thereafter, the transistors 30a, 30b, 30c, 30d, 30e, 30f to a conducting state. As a result, the motor drive circuit 18 would not be isolated from the motor 12.

Secondly, the diodes 36a, 36b, 36c protect the phase isolation transistors 34a, 34b, 34c and the transistors 30a, 30b, 30c, 30d, 30e, 30f from damage. As previously stated, should the diodes 36a, 36b, 36c be removed from the phase isolation circuit 20, the induced current Iₘ would flow through the phase isolation transistors 34a, 34b, 34c. In instances where the induced current Iₘ is particularly large, the phase isolation transistors 34a, 34b, 34c and the transistors 30a, 30b, 30c, 30d, 30e, 30f may be damaged.

Thirdly, the presence of diodes 36a, 36b, 36c allow the fault detector 24 to rapidly switch the phase isolation transistors 34a, 34b, 34c to the non-conducting state. Specifically, the fault detector 24 detects a fault condition at a first time and is configured to switch a corresponding phase isolation transistors 34a, 34b, 34c to the non-conducting state at a second time. A time delay is defined as a difference between the second time and the first time. Here, the time delay is less than a predefined safety-critical time delay based on the application. For example, in instances where the fault detector 24 detects an open circuit fault and/or a short circuit fault across a transistor 30a, 30b, 30c, 30d, 30e or 30f, the predefined safety-critical time delay may be 10µs, 50µs, 100µs, or 500µs. In instances where the fault detector 24 detects an open circuit fault and/or a short circuit fault across a phase isolation transistor 34a, 34b or 34c, the predefined safety-critical time delay may be 10ms, 50ms, 100ms, or 500ms.

In contrast, should the diodes 36a, 36b, 36c be removed from the phase isolation circuit 20, a time delay greater than the predetermined time delay is required prior to switching the phase isolation transistors 34a, 34b, 34c to the non-conducting state. This is because, in order to prevent the induced current Iₘ from flowing through the phase isolation transistors 34a, 34b, 34c, a time delay greater than the predetermined time delay is required to allow the induced current Iₘ to naturally decay. Otherwise, if the phase isolation transistors 34a, 34b, 34c are too quickly switched to the non-conducting state and the phase isolation circuit 20 does not include diodes 36a, 36b, 36c to dissipate the induced current Iₘ, the induced current Iₘ will flow through the phase isolation transistors 34a, 34b, 34c and, thereafter, to the transistors 30a, 30b, 30c, 30d, 30e, 30f.

Fourthly, the presence of diodes 36a, 36b, 36c diverts the induced current Iₘ from the phase isolation transistors 34a, 34b, 34c, regardless of the fault condition detected by the fault detector 24. Specifically, regardless of whether the fault detector 24 detects an open circuit fault and/or a short circuit fault across the transistors 30a, 30b, 30c, 30d, 30e, 30f and regardless of whether the fault detector 24 detects an open circuit fault and/or a short circuit fault across the phase isolation transistors 34a, 34b, 34c, the diodes 36a, 36b, 36c divert the induced current Iₘ from the phase isolation transistors 34a, 34b, 34c.

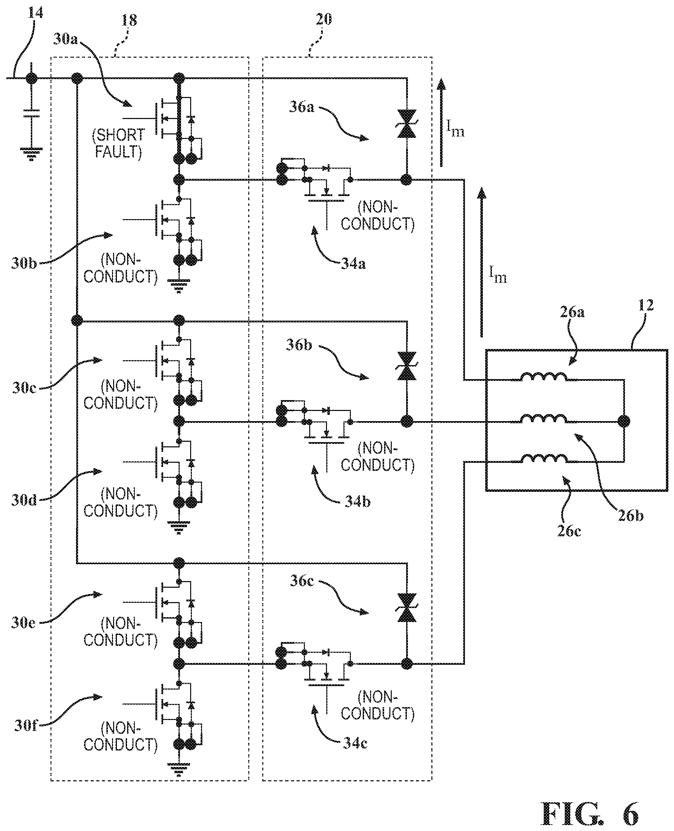

Referring to FIG. 6, an example is provided where a short circuit fault exists across the transistor 30a. As shown, when phase isolation transistors 34a, 34b, 34c are switched to the non-conducting state upon detection of the fault, the induced current Iₘ flows through the diode 36a, instead of through the phase isolation transistor 34a, which is in the non-conducting state. The current flow will last for as long as the induced voltage by the motor is at least greater than the blocking voltage of diode 36a and will then stop.

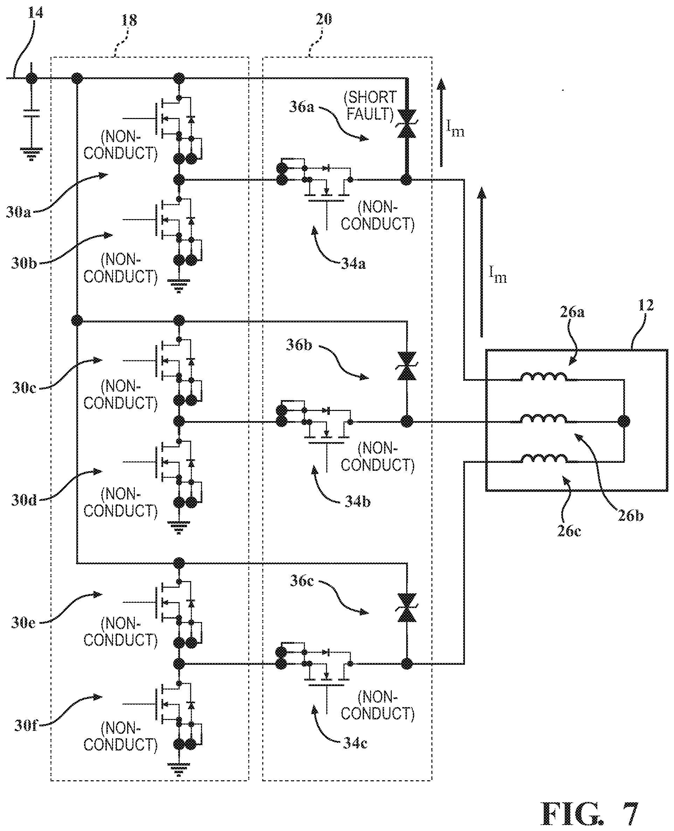

Fifthly, if diodes 36a, 36b, 36c themselves encounter a short circuit fault condition, such as shown in FIG. 7, the induced current Iₘ will only be able to flow in the circuit if the induced voltage by the motor is greater than the battery voltage or the blocking voltage of diodes 36a, 36b, 36c. The induced current Iₘ will be zero, otherwise.

While the diodes 36a, 36b, 36c may be any set of suitable diodes, there are certain advantages to using bidirectional TVS diodes. Specifically, the TVS diodes 36a, 36b, 36c are able to protect against transient voltages from the battery 14. This is because the TVS diodes 36a, 36b, 36c will start conducting current if their threshold voltage is exceeded, therefore clipping the transient voltages.

## Claims

1. An electric power steering system (10) comprising:
an electric motor (12) comprising a phase winding (26a);
a battery (14) configured to provide power;
a motor drive circuit (18) coupled to the battery (14) and to the electric motor (12), the motor drive circuit (18) being configured to provide power from the battery (14) to the electric motor (12), the motor drive circuit (18) comprising a branch (28a) including a transistor (30a, 30b) configured to operate in a conducting state and a non-conducting state, the branch (28a) being coupled to the phase winding (26a) of the electric motor (12);
a phase isolation circuit (20) comprising a phase isolation branch (32a) coupled to the branch (28a) of the motor drive circuit (18) and to the phase winding (26a), such that the branch (28a) is coupled to the phase winding (26a) of the electric motor (12) via the phase isolation branch (32a), wherein the phase isolation branch (32a) includes:
a bidirectional transient voltage suppressor (TVS) diode (36a) coupled to the phase winding (26a) of the electric motor (12); and
a phase isolation transistor (34a) configured to operate in a conducting state and a non-conducting state, the phase isolation transistor (34a) being coupled to the phase winding (26a,) of the electric motor (12); and
a fault detector (24) configured to detect a fault condition and switch the phase isolation transistor (34a) to the non-conducting state in response to detecting the fault condition;
wherein the bidirectional TVS diode (36a) is configured for allowing a current to flow bidirectionally therethrough when a voltage across the bidirectional TVS diode (36a) exceeds a blocking voltage of the bidirectional TVS diode (36a).

2. The electric power steering system (10) of claim 1, wherein the phase winding (26a) is further defined as a first phase winding (26a), and wherein the electric motor (12) further comprises a second phase winding (26b) and a third phase winding (26c).

3. The electric power steering system (10) of claim 2, wherein the branch (28a) is further defined as a first branch (28a), and wherein the motor drive circuit (18) further comprises:
a second branch (28b) including a second transistor (30c, 30d), the second branch (28b) being coupled to the second phase winding (26b) of the electric motor (12); and
a third branch (28c) including a third transistor (30e, 30f), the third branch (28c) being coupled to the third phase winding (26c) of the electric motor (12).

4. The electric power steering system (10) of claim 3, wherein the phase isolation branch (32a) is further defined as a first phase isolation branch (32a), wherein the bidirectional TVS diode (36a) is further defined as a first bidirectional TVS diode (36a), and wherein the phase isolation transistor (34a) is further defined as a first phase isolation transistor (34a), and wherein the phase isolation circuit (20) further comprises:
a second phase isolation branch (32b) coupled to the second branch (28b) of the motor drive circuit (18) and to the second phase winding (26b), the second branch (28b) being coupled to the second phase winding (26b) of the electric motor (12) via the second phase isolation branch (32b), the second phase isolation branch (32b) including a second bidirectional TVS diode (36b) and a second phase isolation transistor (34b), the second bidirectional TVS diode (36b) and the second phase isolation transistor (34b) being coupled to the second phase winding (26b) of the electric motor (12); and
a third phase isolation branch (32c) coupled to the third branch (28c) of the motor drive circuit (18) and to the third phase winding (26c), the third branch (28c) being coupled to the third phase winding (26c) of the electric motor (12) via the third phase isolation branch (32c), the third phase isolation branch (32c) including a third bidirectional TVS diode (36c) and a third phase isolation transistor (34c), the third bidirectional TVS diode (36c) and the third phase isolation transistor (34c) being coupled to the third phase winding (26c) of the electric motor (12).

5. The electric power steering system (10) of claim 1, further comprising a motor controller (22) configured to switch the transistor (30a, 30b) between a conducting state and a non-conducting state.

6. The electric power steering system (10) of claim 1, wherein a current induced by the electric motor (12) flows through the bidirectional TVS diode (36a) after the fault detector (24) switches the phase isolation transistor (34a) to the non-conducting state.

7. The electric power steering system (10) of claim 1, wherein the bidirectional TVS diode (36a) is configured to divert a current induced by the electric motor (12) from the phase isolation transistor (34a) after the fault detector (24) switches the phase isolation transistor (34a) to the non-conducting state.

8. The electric power steering system (10) of claim 1, wherein the transistor (30a, 30b) is further defined as a first transistor (30a), wherein the branch (28a) includes a second transistor (30b), and wherein the fault detector (24) is configured to detect an open circuit fault and/or a short circuit fault across at least one of the first transistor (30a) and the second transistor (30b).

9. The electric power steering system (10) of claim 8, wherein the fault detector (24) is configured to switch one of the first transistor (30a) and the second transistor (30b) to the non-conducting state in response to detecting an open circuit fault and/or a short circuit fault across at least one of the first transistor (30a) and the second transistor (30b).

10. The electric power steering system (10) of claim 4, wherein the fault detector (24) is configured to detect an open circuit fault and/or a short circuit fault across at least one of the first phase isolation transistor (34a), the second phase isolation transistor (34b), and the third phase isolation transistor (34c).

11. The electric power steering system (10) of claim 10, wherein the fault detector (24) is configured to switch the first, second, and third transistors (30a, 30b, 30c, 30d, 30e, 30f) to the non-conducting state in response to detecting an open circuit fault across at least one of the first phase isolation transistor (34a), the second phase isolation transistor (34b), and the third phase isolation transistor (34c).

12. The electric power steering system (10) of claim 10, wherein the fault detector (24) is configured to switch one of the first phase isolation transistor (34a), the second phase isolation transistor (34b), and the third phase isolation transistor (34c) to the non-conducting state in response to detecting an open circuit fault across either of the other phase isolation transistors (34a, 34b, 34c).

13. A method of isolating power from an electric motor (12) of an electric power steering system (10), the electric power steering system (10) including a battery (14), a phase isolation circuit (20) including a phase isolation transistor (34a) and a bidirectional transient voltage suppressor (TVS) diode (36a), a motor drive circuit (18) coupled to the battery (14) and coupled to the electric motor (12) via the phase isolation circuit (20) and including a transistor (30a, 30b), the method comprising steps of:
controlling the transistor (30a, 30b) of the motor drive circuit (18) to provide power from a battery (14) to the electric motor (12) via a phase isolation circuit (20);
detecting a fault condition of the electric power steering system (10);
controlling the phase isolation transistors (34a) of the phase isolation circuit (20) to prevent the motor drive circuit (18) from providing power to the electric motor (12); and
diverting a current induced by the electric motor (12), with the bidirectional TVS diode (36a), from the phase isolation transistor (34a) after controlling the transistor (30a, 30b) of the phase isolation circuit (20) to prevent the motor drive circuit (18) from providing power to the electric motor (12), the bidirectional TVS diode (36a) allowing the current induced by the electric motor (12) to flow bidirectionally therethrough, when a voltage across the bidirectional TVS diode (36a) exceeds a blocking voltage of the bidirectional TVS diode (36a).

14. The method of claim 13, wherein the step of detecting a fault condition of the electric power steering system (10) comprises detecting an open circuit fault and/or a short circuit fault across the transistor (30a, 30b) of the motor drive circuit (18).

15. The method of claim 13, wherein the step of controlling the transistor (30a, 30b) phase isolation circuit (20) comprises a step of switching the phase isolation transistor (34a) from a conducting state to a non-conducting state.

## Patentansprüche

1. Elektrisches Servolenksystem (10), umfassend:
einen Elektromotor (12), umfassend eine Phasenwicklung (26a);
eine Batterie (14), die zum Bereitstellen von Energie konfiguriert ist;
eine Motoransteuerschaltung (18), die mit der Batterie (14) und dem Elektromotor (12) gekoppelt ist, wobei die Motoransteuerschaltung (18) so konfiguriert ist, dass sie den Elektromotor (12) mit Energie von der Batterie (14) versorgt, wobei die Motoransteuerschaltung (18) einen Zweig (28a) umfasst, der einen Transistor (30a, 30b) einschließt, der so konfiguriert ist, dass er in einem leitenden und in einem nichtleitenden Zustand arbeitet, wobei der Zweig (28a) mit der Phasenwicklung (26a) des Elektromotors (12) gekoppelt ist;
eine Phasenisolationsschaltung (20), umfassend einen Phasenisolationszweig (32a), der mit dem Zweig (28a) der Motoransteuerschaltung (18) und mit der Phasenwicklung (26a) so gekoppelt ist, dass der Zweig (28a) über den Phasenisolationszweig (32a) mit der Phasenwicklung (26a) des Elektromotors (12) gekoppelt ist, wobei der Phasenisolationszweig (32a) einschließt:
eine bidirektionale Überspannungsschutzdiode (TVS-Diode, TVS = transient voltage suppressor) (36a), die mit der Phasenwicklung (26a) des Elektromotors (12) gekoppelt ist; und
einen Phasenisolationstransistor (34a), der so konfiguriert ist, dass er sowohl in einem leitenden als auch in einem nichtleitenden Zustand arbeitet, wobei der Phasenisolationstransistor (34a) mit der Phasenwicklung (26a) des Elektromotors (12) gekoppelt ist; und
einen Fehlerdetektor (24), der so konfiguriert ist, dass er einen Fehlerzustand erkennt und den Phasenisolationstransistor (34a) in den nichtleitenden Zustand schaltet, wenn der Fehlerzustand erkannt wird;
wobei die bidirektionale TVS-Diode (36a) so konfiguriert ist, dass ein Strom in beide Richtungen durch diese hindurch fließen kann, wenn eine Spannung an der bidirektionalen TVS-Diode (36a) eine Sperrspannung der bidirektionalen TVS-Diode (36a) überschreitet.

2. Elektrisches Servolenksystem (10) nach Anspruch 1, wobei die Phasenwicklung (26a) ferner als erste Phasenwicklung (26a) definiert ist und der Elektromotor (12) ferner eine zweite Phasenwicklung (26b) und eine dritte Phasenwicklung (26c) umfasst.

3. Elektrisches Servolenksystem (10) nach Anspruch 2, wobei der Zweig (28a) ferner als erster Zweig (28a) definiert ist und wobei die Motoransteuerschaltung (18) ferner umfasst:
einen zweiten Zweig (28b) einschließlich eines zweiten Transistors (30c, 30d), wobei der zweite Zweig (28b) mit der zweiten Phasenwicklung (26b) des Elektromotors (12) gekoppelt ist; und
einen dritten Zweig (28c) einschließlich eines dritten Transistors (30e, 30f), wobei der dritte Zweig (28c) mit der dritten Phasenwicklung (26c) des Elektromotors (12) gekoppelt ist.

4. Elektrisches Servolenksystem (10) nach Anspruch 3, wobei der Phasenisolationszweig (32a) ferner als erster Phasenisolationszweig (32a) definiert ist, wobei die bidirektionale TVS-Diode (36a) ferner als erste bidirektionale TVS-Diode (36a) definiert ist und wobei der Phasenisolationstransistor (34a) ferner als erster Phasenisolationstransistor (34a) definiert ist und wobei die Phasenisolationsschaltung (20) ferner umfasst:
einen zweiten Phasenisolationszweig (32b), der mit dem zweiten Zweig (28b) der Motoransteuerschaltung (18) und mit der zweiten Phasenwicklung (26b) gekoppelt ist, wobei der zweite Zweig (28b) über den zweiten Phasenisolationszweig (32b) mit der zweiten Phasenwicklung (26b) des Elektromotors (12) gekoppelt ist, wobei der zweite Phasenisolationszweig (32b) eine zweite bidirektionale TVS-Diode (36b) und einen zweiten Phasenisolationstransistor (34b) einschließt, wobei die zweite bidirektionale TVS-Diode (36b) und der zweite Phasenisolationstransistor (34b) mit der zweiten Phasenwicklung (26b) des Elektromotors (12) gekoppelt sind; und
einen dritten Phasenisolationszweig (32c), der mit dem dritten Zweig (28c) der Motoransteuerschaltung (18) und mit der dritten Phasenwicklung (26c) gekoppelt ist, wobei der dritte Zweig (28c) über den dritten Phasenisolationszweig (32c) mit der dritten Phasenwicklung (26c) des Elektromotors (12) gekoppelt ist, wobei der dritte Phasenisolationszweig (32c) eine dritte bidirektionale TVS-Diode (36c) und einen dritten Phasenisolationstransistor (34c) einschließt, wobei die dritte bidirektionale TVS-Diode (36c) und der dritte Phasenisolationstransistor (34c) mit der dritten Phasenwicklung (26c) des Elektromotors (12) gekoppelt sind.

5. Elektrisches Servolenksystem (10) nach Anspruch 1, ferner umfassend eine Motorsteuerung (22), die so konfiguriert ist, dass sie den Transistor (30a, 30b) zwischen einem leitenden Zustand und einem nichtleitenden Zustand umschaltet.

6. Elektrisches Servolenksystem (10) nach Anspruch 1, wobei ein vom Elektromotor (12) induzierter Strom durch die bidirektionale TVS-Diode (36a) fließt, nachdem der Fehlerdetektor (24) den Phasenisolationstransistor (34a) in den nichtleitenden Zustand geschaltet hat.

7. Elektrisches Servolenksystem (10) nach Anspruch 1, wobei die bidirektionale TVS-Diode (36a) so konfiguriert ist, dass sie einen vom Elektromotor (12) induzierten Strom vom Phasenisolationstransistor (34a) ableitet, nachdem der Fehlerdetektor (24) den Phasenisolationstransistor (34a) in den nichtleitenden Zustand geschaltet hat.

8. Elektrisches Servolenksystem (10) nach Anspruch 1, wobei der Transistor (30a, 30b) ferner als erster Transistor (30a) definiert ist, wobei der Zweig (28a) einen zweiten Transistor (30b) einschließt und wobei der Fehlerdetektor (24) so konfiguriert ist, dass er einen Offener-Stromkreis-Fehler und/oder einen Kurzschlussfehler an mindestens einem aus dem ersten Transistor (30a) und dem zweiten Transistor (30b) erkennt.

9. Elektrisches Servolenksystem (10) nach Anspruch 8, wobei der Fehlerdetektor (24) so konfiguriert ist, dass er einen aus dem ersten Transistor (30a) und dem zweiten Transistor (30b) in den nichtleitenden Zustand schaltet, wenn er einen Offener-Stromkreis-Fehler und/oder einen Kurzschlussfehler an mindestens einem aus dem ersten Transistor (30a) und dem zweiten Transistor (30b) erkennt.

10. Elektrisches Servolenksystem (10) nach Anspruch 4, wobei der Fehlerdetektor (24) so konfiguriert ist, dass er einen Offener-Stromkreis-Fehler und/oder einen Kurzschlussfehler an mindestens einem aus dem Isolationstransistor der ersten Phase (34a), dem Isolationstransistor der zweiten Phase (34b) und dem Isolationstransistor der dritten Phase (34c) erkennt.

11. Elektrisches Servolenksystem (10) nach Anspruch 10, wobei der Fehlerdetektor (24) so konfiguriert ist, dass er den ersten, zweiten und dritten Transistor (30a, 30b, 30c, 30d, 30e, 30f) in den nichtleitenden Zustand schaltet, wenn er einen Offener-Stromkreis-Fehler an mindestens einem aus dem Isolationstransistor der ersten Phase (34a), dem Isolationstransistor der zweiten Phase (34b) und dem Isolationstransistor der dritten Phase (34c) erkennt.

12. Elektrisches Servolenksystem (10) nach Anspruch 10, wobei der Fehlerdetektor (24) so konfiguriert ist, dass er einen aus dem Isolationstransistor der ersten Phase (34a), dem Isolationstransistor der zweiten Phase (34b) und dem Isolationstransistor der dritten Phase (34c) in den nichtleitenden Zustand schaltet, wenn er einen Offener-Stromkreis-Fehler an einem der anderen Phasenisolationstransistoren (34a, 34b, 34c) erkennt.

13. Verfahren zum Isolieren von Energie von einem Elektromotor (12) eines elektrischen Servolenksystems (10), wobei das elektrische Servolenksystem (10) eine Batterie (14), eine Phasenisolationsschaltung (20) einschließlich eines Phasenisolationstransistors (34a) und einer bidirektionalen Überspannungsschutzdiode (TVS-Diode) (36a), eine Motoransteuerschaltung (18), die mit der Batterie (14) und über die Phasenisolationsschaltung (20) mit dem Elektromotor (12) gekoppelt ist, und einen Transistor (30a, 30b) einschließt, wobei das Verfahren die Schritte umfasst:
Steuern des Transistors (30a, 30b) der Motoransteuerschaltung (18) zur Energieversorgung des Elektromotors (12) aus einer Batterie (14) über eine Phasenisolationsschaltung (20);
Erkennen eines Fehlerzustands des elektrischen Servolenksystems (10);
Steuern der Phasenisolationstransistoren (34a) der Phasenisolationsschaltung (20), um zu verhindern, dass die Motoransteuerschaltung (18) dem Elektromotor (12) Energie bereitstellt; und
Ableiten eines vom Elektromotor (12) induzierten Stroms mit der bidirektionalen TVS-Diode (36a) vom Phasenisolationstransistor (34a), nachdem die Transistoren (30a, 30b) der Phasenisolationsschaltung (20) so gesteuert wurden, dass sie verhindern, dass die Motoransteuerschaltung (18) dem Elektromotor (12) bereitstellt, wobei die bidirektionale TVS-Diode (36a) ermöglicht, dass der vom Elektromotor (12) induzierte Strom bidirektional durch diese hindurch fließt, wenn eine Spannung an der bidirektionalen TVS-Diode (36a) eine Sperrspannung der bidirektionalen TVS-Diode (36a) überschreitet.

14. Verfahren nach Anspruch 13, wobei der Schritt des Erkennens eines Fehlerzustands des elektrischen Servolenksystems (10) das Erkennen eines Offener-Stromkreis-Fehlers und/oder eines Kurzschlussfehlers am Transistor (30a, 30b) der Motoransteuerschaltung (18) umfasst.

15. Verfahren nach Anspruch 13, wobei der Schritt des Steuerns der Phasenisolationsschaltung (20) des Transistors (30a, 30b) einen Schritt des Umschaltens des Phasenisolationstransistors (34a) von einem leitenden Zustand in einen nichtleitenden Zustand umfasst.

## Revendications

1. Système de direction assistée électrique (10) comprenant :
un moteur électrique (12) comprenant un enroulement de phase (26a) ;
une batterie (14) conçue pour fournir de l'énergie ;
un circuit d'entraînement de moteur (18) couplé à la batterie (14) et au moteur électrique (12), le circuit d'entraînement de moteur (18) étant configuré pour fournir de l'énergie, de la batterie (14) au moteur électrique (12), le circuit d'entraînement de moteur (18) comprenant une branche (28a) comportant un transistor (30a, 30b) configuré pour fonctionner dans un état conducteur et un état non conducteur, la branche (28a) étant couplée à l'enroulement de phase (26a) du moteur électrique (12) ;
un circuit d'isolation de phase (20) comprenant une branche d'isolation de phase (32a) couplée à la branche (28a) du circuit d'entraînement de moteur (18) et à l'enroulement de phase (26a), de telle sorte que la branche (28a) est couplée à l'enroulement de phase (26a) du moteur électrique (12) par l'intermédiaire de la branche d'isolation de phase (32a), dans lequel la branche d'isolation de phase (32a) comporte :
une diode de suppresseur de tension transitoire (TVS) bidirectionnelle (36a) couplée à l'enroulement de phase (26a) du moteur électrique (12) ; et
un transistor d'isolation de phase (34a) configuré pour fonctionner dans un état conducteur et un état non conducteur, le transistor d'isolation de phase (34a) étant couplé à l'enroulement de phase (26a) du moteur électrique (12) ; et
un détecteur de défaut (24) configuré pour détecter une condition de défaut et commuter le transistor d'isolation de phase (34a) dans l'état non conducteur en réponse à la détection de la condition de défaut ;
dans lequel la diode TVS bidirectionnelle (36a) est configurée pour permettre à un courant de circuler de manière bidirectionnelle à travers elle lorsqu'une tension aux bornes de la diode TVS bidirectionnelle (36a) dépasse une tension de blocage de la diode TVS bidirectionnelle (36a).

2. Système de direction assistée électrique (10) selon la revendication 1, dans lequel l'enroulement de phase (26a) est en outre défini comme un premier enroulement de phase (26a), et dans lequel le moteur électrique (12) comprend en outre un deuxième enroulement de phase (26b) et un troisième enroulement de phase (26c).

3. Système de direction assistée électrique (10) selon la revendication 2, dans lequel la branche (28a) est en outre définie comme une première branche (28a), et dans lequel le circuit d'entraînement de moteur (18) comprend en outre :
une deuxième branche (28b) comportant un deuxième transistor (30c, 30d), la deuxième branche (28b) étant couplée au deuxième enroulement de phase (26b) du moteur électrique (12) ; et
une troisième branche (28c) comportant un troisième transistor (30e, 30f), la troisième branche (28c) étant couplée au troisième enroulement de phase (26c) du moteur électrique (12).

4. Système de direction assistée électrique (10) selon la revendication 3, dans lequel la branche d'isolation de phase (32a) est en outre définie comme une première branche d'isolation de phase (32a), dans lequel la diode TVS bidirectionnelle (36a) est en outre définie comme une première diode TVS bidirectionnelle (36a), et dans lequel le transistor d'isolation de phase (34a) est en outre défini comme un premier transistor d'isolation de phase (34a), et dans lequel le circuit d'isolation de phase (20) comprend en outre :
une deuxième branche d'isolation de phase (32b) couplée à la deuxième branche (28b) du circuit d'entraînement de moteur (18) et au deuxième enroulement de phase (26b), la deuxième branche (28b) étant couplée au deuxième enroulement de phase (26b) du moteur électrique (12) par l'intermédiaire de la deuxième branche d'isolation de phase (32b), la deuxième branche d'isolation de phase (32b) comportant une deuxième diode TVS bidirectionnelle (36b) et un deuxième transistor d'isolation de phase (34b), la deuxième diode TVS bidirectionnelle (36b) et le deuxième transistor d'isolation de phase (34b) étant couplés au deuxième enroulement de phase (26b) du moteur électrique (12) ; et
une troisième branche d'isolation de phase (32c) couplée à la troisième branche (28c) du circuit d'entraînement de moteur (18) et au troisième enroulement de phase (26c), la troisième branche (28c) étant couplée au troisième enroulement de phase (26c) du moteur électrique (12) par l'intermédiaire la troisième branche d'isolation de phase (32c), la troisième branche d'isolation de phase (32c) comportant une troisième diode TVS bidirectionnelle (36c) et un troisième transistor d'isolation de phase (34c), la troisième diode TVS bidirectionnelle (36c) et le troisième transistor d'isolation de phase (34c) étant couplés au troisième enroulement de phase (26c) du moteur électrique (12).

5. Système de direction assistée électrique (10) selon la revendication 1, comprenant en outre un dispositif de commande de moteur (22) configuré pour commuter le transistor (30a, 30b) entre un état conducteur et un état non conducteur.

6. Système de direction assistée électrique (10) selon la revendication 1, dans lequel un courant induit par le moteur électrique (12) circule à travers la diode TVS bidirectionnelle (36a) après que le détecteur de défaut (24) a commuté le transistor d'isolation de phase (34a) dans l'état non conducteur.

7. Système de direction assistée électrique (10) selon la revendication 1, dans lequel la diode TVS bidirectionnelle (36a) est configurée pour dévier un courant induit par le moteur électrique (12) à partir du transistor d'isolation de phase (34a) après que le détecteur de défaut (24) a commuté le transistor d'isolation de phase (34a) dans l'état non conducteur.

8. Système de direction assistée électrique (10) selon la revendication 1, dans lequel le transistor (30a, 30b) est en outre défini comme un premier transistor (30a), dans lequel la branche (28a) comporte un deuxième transistor (30b), et dans lequel le détecteur de défaut (24) est configuré pour détecter un défaut de circuit ouvert et/ou un défaut de court-circuit aux bornes d'au moins un transistor parmi le premier transistor (30a) et le deuxième transistor (30b).

9. Système de direction assistée électrique (10) selon la revendication 8, dans lequel le détecteur de défaut (24) est configuré pour commuter un transistor parmi le premier transistor (30a) et le deuxième transistor (30b) dans l'état non conducteur en réponse à la détection d'un défaut de circuit ouvert et/ou d'un défaut de court-circuit aux bornes d'au moins un transistor parmi le premier transistor (30a) et le deuxième transistor (30b).

10. Système de direction assistée électrique (10) selon la revendication 4, dans lequel le détecteur de défaut (24) est configuré pour détecter un défaut de circuit ouvert et/ou un défaut de court-circuit aux bornes d'au moins un transistor parmi le premier transistor d'isolation de phase (34a), le deuxième transistor d'isolation de phase (34b) et le troisième transistor d'isolation de phase (34c).

11. Système de direction assistée électrique (10) selon la revendication 10, dans lequel le détecteur de défaut (24) est configuré pour commuter les premier, deuxième et troisième transistors (30a, 30b, 30c, 30d, 30e, 30f) dans l'état non conducteur en réponse à la détection d'un défaut de circuit ouvert aux bornes d'au moins un transistor parmi le premier transistor d'isolation de phase (34a), le deuxième transistor d'isolation de phase (34b) et le troisième transistor d'isolation de phase (34c).

12. Système de direction assistée électrique (10) selon la revendication 10, dans lequel le détecteur de défaut (24) est configuré pour commuter un transistor parmi le premier transistor d'isolation de phase (34a), le deuxième transistor d'isolation de phase (34b) et le troisième transistor d'isolation de phase (34c) dans l'état non conducteur en réponse à la détection d'un défaut de circuit ouvert aux bornes de l'un ou l'autre des autres transistors d'isolation de phase (34a, 34b, 34c).

13. Procédé d'isolation de l'énergie d'un moteur électrique (12) d'un système de direction assistée électrique (10), le système de direction assistée électrique (10) comportant une batterie (14), un circuit d'isolation de phase (20) comportant un transistor d'isolation de phase (34a) et une diode de suppresseur de tension transitoire (TVS) bidirectionnelle (36a), un circuit d'entraînement de moteur (18) couplé à la batterie (14) et couplé au moteur électrique (12) par l'intermédiaire du circuit d'isolation de phase (20) et comportant un transistor (30a, 30b), le procédé comprenant les étapes suivantes :
commande du transistor (30a, 30b) du circuit d'entraînement de moteur (18) pour fournir de l'énergie, d'une batterie (14) au moteur électrique (12) par l'intermédiaire d'un circuit d'isolation de phase (20) ;
détection d'une condition de défaut du système de direction assistée électrique (10) ;
commande des transistors d'isolation de phase (34a) du circuit d'isolation de phase (20) pour empêcher le circuit d'entraînement de moteur (18) de fournir de l'énergie au moteur électrique (12) ; et
déviation d'un courant induit par le moteur électrique (12), avec la diode TVS bidirectionnelle (36a), à partir du transistor d'isolation de phase (34a) après la commande du transistor (30a, 30b) du circuit d'isolation de phase (20) pour empêcher le circuit d'entraînement de moteur (18) de fournir de l'énergie au moteur électrique (12), la diode TVS bidirectionnelle (36a) permettant au courant induit par le moteur électrique (12) de circuler de manière bidirectionnelle à travers elle, lorsqu'une tension aux bornes de la diode TVS bidirectionnelle (36a) dépasse une tension de blocage de la diode TVS bidirectionnelle (36a).

14. Procédé selon la revendication 13, dans lequel l'étape de détection d'une condition de défaut du système de direction assistée électrique (10) comprend la détection d'un défaut de circuit ouvert et/ou d'un défaut de court-circuit aux bornes du transistor (30a, 30b) du circuit d'entraînement de moteur (18).

15. Procédé selon la revendication 13, dans lequel l'étape de commande du circuit d'isolation de phase (20) du transistor (30a, 30b) comprend une étape de commutation du transistor d'isolation de phase (34a), d'un état conducteur dans un état non conducteur.
